# FASCICULE DE BREVET EUROPEEN

(11) **EP 3 539 806 B1**
(45) Date de publication et mention de la délivrance du brevet: **03.05.2023**
(21) Numéro de dépôt: 19162311.5
(22) Date de dépôt: 12.03.2019
(51) Int. Cl.: B60J 5/04, E05B 79/04, E05B 83/18, E05B 85/02

(54) **AGENCEMENT D'UN OUVRANT DE VÉHICULE AUTOMOBILE AVEC UN RENFORT DE SERRURE**
ANORDNUNG EINES ÖFFNUNGSELEMENTS EINES KRAFTFAHRZEUGS MIT EINER VERSTÄRKUNG DES SCHLOSSES
ARRANGEMENT OF AN OPENABLE BODY SECTION OF A MOTOR VEHICLE WITH LOCK REINFORCEMENT

(30) Priorité: 12.03.2018 FR 1852113
(43) Date de publication de la demande: 18.09.2019
(73) Titulaire: Renault s.a.s, 92100 Boulogne Billancourt (FR)
(72) Inventeur: GUILLOT, Raphael, 78320 Le Mesnil Saint Denis (FR)
(74) Mandataire: Renault Group

(56) Documents cités:
- WO-A2-2013/150210
- US-A- 6 019 418

## Description

L'invention concerne un agencement comprenant un ouvrant de véhicule automobile, un renfort de serrure et une serrure. L'invention porte aussi sur un véhicule automobile comprenant un tel agencement. L'invention porte enfin sur un procédé d'obtention d'un tel agencement.

Une serrure d'un ouvrant de véhicule automobile est généralement fixée sur l'ouvrant par l'intermédiaire d'un renfort. Etant donnée la forme de la serrure, le renfort présente généralement une partie creuse, profonde, difficile à obtenir par emboutissage. En cas d'ouvrant de type porte de coffre, aussi appelée hayon, le renfort de serrure est particulièrement soumis à des efforts élevés lors du claquement ou fermeture. En effet, une partie de l'énergie liée au poids de la porte de coffre se refermant se retrouve entre la serrure et une gâche. Cette gâche est généralement fixée au niveau d'une jupe disposée par exemple sur un plancher de coffre. Il en résulte des contraintes entre la serrure et la porte de coffre, et par conséquent entre le renfort de serrure et la porte de coffre. En outre, le renfort n'offre pas de pré-maintien de la serrure, rendant difficile le montage de la serrure sur le renfort.

Le document US 6 019 418 A décrit un tel renfort de serrure d'un agencement de porte de coffre automobile. Le renfort de serrure de ce document est fixé sur un élément de renfort lui-même positionné sur une doublure constituant l'ouvrant.

Le document WO 2013/150210 A2 divulgue un renfort de serrure pour porte latérale automobile obtenu par pliage d'une tôle métallique et il comporte une paroi de fixation et une paroi de réception perpendiculaire à la paroi de fixation.

Le but de l'invention est de fournir un agencement comprenant un ouvrant, un renfort de serrure et une serrure, remédiant aux inconvénients ci-dessus et améliorant les agencements connus de l'art antérieur. En particulier, l'invention permet de réaliser un agencement qui soit simple, fiable et qui offre une excellente tenue en endurance malgré les claquements répétés de la porte de coffre.

Pour atteindre cet objectif, l'invention porte sur un agencement comprenant un ouvrant de véhicule automobile de type porte de coffre, un renfort de serrure fixé sur cet ouvrant et une serrure, l'ouvrant comprenant :
- une doublure dotée d'une première face et d'une deuxième face, la première face étant opposée à la deuxième face,
- un panneau comprenant une face intérieure et une face extérieure, la face intérieure étant opposée à la face extérieure,
- la deuxième face de la doublure étant fixée à la face intérieure du panneau,
- le renfort de serrure étant obtenu par pliage d'une tôle métallique et le renfort de serrure étant fixé sur la première face de la doublure,
- le renfort de serrure présente une forme générale de boîte comprenant une paroi de fixation du renfort sur la première face de la doublure de l'ouvrant, notamment une paroi de fixation plane ou sensiblement plane,
- le renfort comprend une paroi de réception de la serrure sur le renfort, distincte de la paroi de fixation, la paroi de réceptior étant perpendiculaire ou sensiblement perpendiculaire à la paroi de fixation.

La première face de la doublure de l'ouvrant peut être plane ou sensiblement plane au niveau de la fixation du renfort et/ou dotée d'au moins une nervure.

La paroi de fixation et la paroi de réception peuvent se rejoindre par une paroi de liaison, notamment une paroi de liaison dotée d'au moins une nervure.

La paroi de réception et/ou la paroi de liaison peuvent comprendre une ouverture au travers de laquelle la serrure peut s'étendre une fois assemblée au renfort.

Le renfort peut comprendre deux parois de rigidification s'étendant perpendiculairement ou sensiblement perpendiculairement à la paroi de fixation et/ou à la paroi de réception, notamment chaque paroi de rigidification pouvant être dotée de bords tombant.

Le renfort peut comprendre une paroi de soutien liant les parois de rigidification entre elles, par l'intermédiaire de premières pattes d'assemblage venant à recouvrement de la paroi de soutien et/ou des parois de rigidification, de sorte à être fixées par collage et/ou soudage.

Le renfort peut comprendre des deuxièmes pattes d'assemblage venant à recouvrement d'une deuxième face d'appui de la paroi de fixation, notamment d'une deuxième face d'appui intérieure, de sorte à être fixées par collage et/ou soudage et/ou les deuxièmes pattes pouvant être collées et/ou soudées sur la deuxième face d'appui de la paroi de fixation.

Chaque première patte d'assemblage peut comprendre un ergot, notamment un ergot s'étendant parallèlement ou sensiblement parallèlement à la paroi de réception de sorte à assurer le pré maintien de la serrure lors de la fixation de la serrure sur la paroi de réception.

L'invention porte encore sur un véhicule automobile comprenant au moins un agencement tel que défini précédemment.

L'invention porte encore sur un procédé d'obtention d'un agencement tel que défini précédemment comprenant les étapes suivantes :
- étape de fourniture d'un renfort de serrure,
- étape de fourniture d'un ouvrant de véhicule automobile, notamment d'un ouvrant de type porte de coffre, l'ouvrant comprenant une doublure dotée d'une première face et d'une deuxième face, la première face étant opposée à la deuxième face, et un panneau comprenant une face intérieure et une face extérieure, la face intérieure étant opposée à la face extérieure, la deuxième face de la doublure étant fixée à la face intérieure du panneau, la première face de la doublure de l'ouvrant étant plane ou sensiblement plane au niveau de la fixation du renfort et/ou dotée d'au moins une nervure,
- étape de fixation du renfort sur la première face de la doublure de l'ouvrant, notamment par vissage,
- étape de fourniture d'une serrure,
- étape d'insertion de la serrure au sein du renfort, notamment en passant la serrure entre les parois de rigidification, notamment en passant la serrure au moins partiellement au sein d'une ouverture ménagée au niveau d'une paroi de réception du renfort, et/ou au niveau d'une paroi de liaison du renfort, notamment jusqu'à venir en butée entre des ergots des premières pattes d'assemblage et une paroi de réception,
- étape de fixation, notamment par vissage, de la serrure sur le renfort, notamment sur une paroi de réception du renfort perpendiculaire ou sensiblement perpendiculaire à la paroi de fixation.

Les figures annexées représentent, à titre d'exemple, un mode de réalisation d'un agencement selon un mode de réalisation de l'invention.
La figure 1 est une vue schématique en coupe partielle selon un plan vertical et longitudinal d'un véhicule automobile selon un mode de réalisation de l'invention.
La figure 2 est une vue de détail du véhicule automobile selon le mode de réalisation de l'invention.
La figure 3 est une vue de détail d'un ouvrant doté d'un renfort selon le mode de réalisation de l'invention.
La figure 4 est une vue de détail de l'ouvrant selon le mode de réalisation de l'invention.
La figure 5 est une vue de dessus d'un renfort selon le mode de réalisation de l'invention.
Les figures 6 et 7 sont des vues en perspective du renfort selon le mode de réalisation de l'invention.
La figure 8 est une vue en coupe selon un plan vertical et longitudinal de l'agencement selon le mode de réalisation de l'invention, illustrant les efforts lors de la fermeture de l'ouvrant.
La figure 9 est une autre vue en coupe selon un plan vertical et longitudinal de l'agencement selon le mode de réalisation de l'invention.
La figure 10 est une vue de dessus d'une serrure montée sur le renfort selon le mode de réalisation de l'invention.
La figure 11 est une vue d'une garniture de porte de coffre selon le mode de réalisation de l'invention.

La direction selon laquelle un véhicule automobile se déplace habituellement en ligne droite est définie comme étant la direction longitudinale X. Par convention, la direction perpendiculaire à la direction longitudinale X, située dans un plan parallèle au sol, est nommée direction transversale Y. La troisième direction, perpendiculaire aux deux autres, est nommée direction verticale Z.

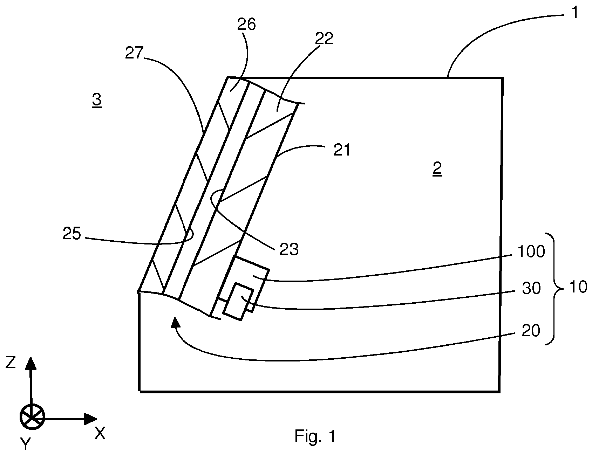

Un exemple d'un mode de réalisation d'un véhicule automobile 1 est illustré sur la figure 1. Le véhicule automobile 1 est par exemple équipé d'un ouvrant de type porte de coffre 20 aussi appelée hayon.

Le véhicule automobile 1 comprend un mode de réalisation d'un agencement 10 illustré sur la figure 1. L'agencement 10 comprend la porte de coffre 20, un renfort 100 de serrure fixé sur la porte de coffre 20 et une serrure 30. De préférence, la porte de coffre 20 comprend une doublure 22 dotée d'une première face 21 et d'une deuxième face 23. La première face 21 est par exemple opposée à la deuxième face 23. De préférence encore, la porte de coffre 20 comprend un panneau 26 doté d'une face intérieure 25 et d'une face extérieure 27. La face intérieure 25 est par exemple opposée à la face extérieure 27. De préférence encore, la deuxième face 23 de la doublure 22 est fixée sur la face intérieure 25 du panneau 26 et/ou assemblée en vis-à-vis de la face intérieure 25. Ainsi, la face extérieure 27 du panneau 26 est orientée vers l'extérieur 3 du véhicule automobile 1. La première face 21 de la doublure 22 est orientée vers l'habitacle 2 du véhicule automobile 1 lorsque la porte de coffre 20 est en position fermée.

Le renfort 100 de serrure est obtenu par pliage d'une tôle métallique.

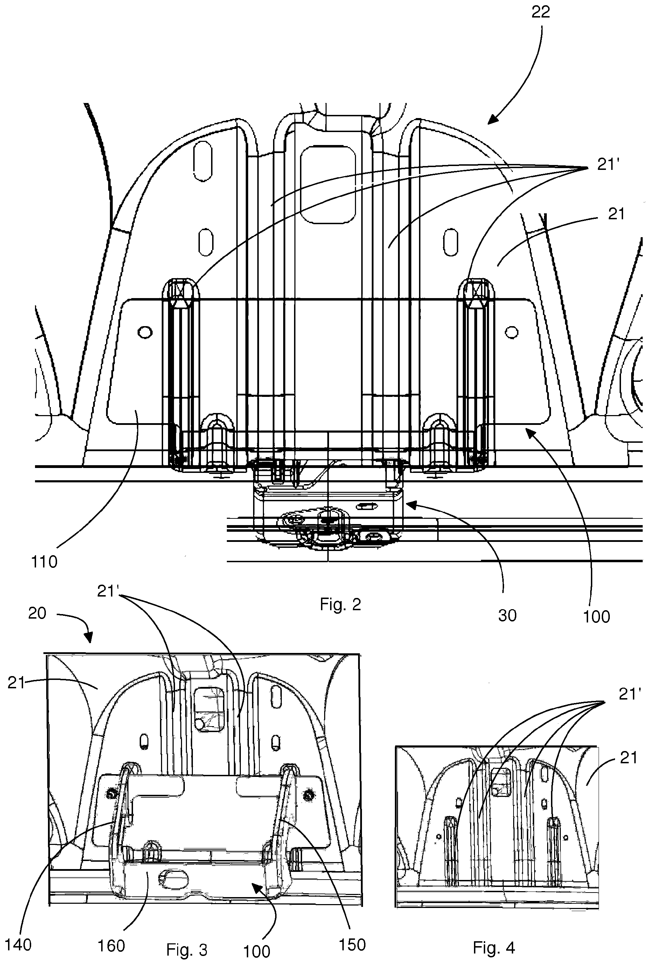

Avantageusement, le renfort 100 de la serrure 30 est fixé sur la première face 21 de la doublure 22. De préférence, la première face 21 est plane, ou sensiblement plane, au niveau de la fixation du renfort 100, c'est-à-dire localement. De plus, la première face 21 est préférablement dotée de nervures 21' comme illustré sur les figures 2, 3 et 4 afin de rigidifier la zone d'accueil du renfort 100 de serrure. Bien que quatre nervures 21' parallèles ou sensiblement parallèles soient représentées, un nombre différent de nervures peut également convenir. En outre, les nervures peuvent ne pas être sensiblement parallèles.

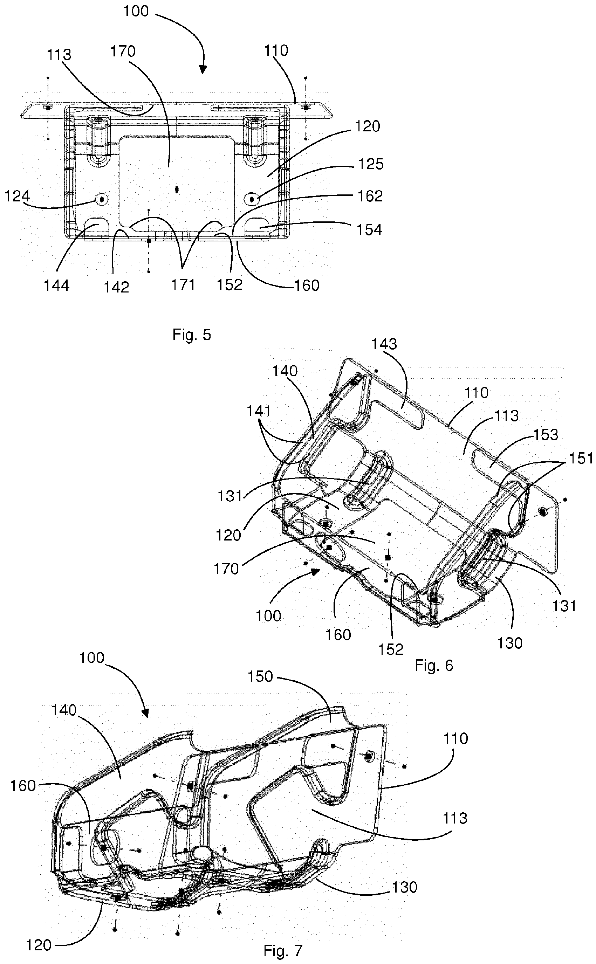

Comme illustré sur les figures 5, 6 et 7, le renfort 100 présente une forme générale de boîte comprenant une paroi de fixation 110 du renfort 100 sur la première face 21 de la doublure 22 de la porte de coffre 20. Comme évoqué précédemment, la première face 21 étant plane ou sensiblement plane, de préférence, la paroi de fixation 110 est plane ou sensiblement plane également. Le renfort 100 comprend aussi une paroi de réception 120 de la serrure 30, par exemple une paroi de réception 120 perpendiculaire ou sensiblement perpendiculaire à la paroi de fixation 110. La paroi de fixation 110 est distincte de la paroi de réception 120 en ce sens qu'elles sont éloignées l'une de l'autre, tout du moins qu'elles s'étendent chacune dans un plan qui lui est propre, les plans étant sécants entre eux.

De préférence, la paroi de fixation 110 et la paroi de réception 120 se rejoignent par une paroi de liaison 130. Par exemple, la paroi de liaison 130 est dotée de nervures 131 comme illustré en particulier sur la figure 6.

De préférence encore, la paroi de réception 120 et/ou la paroi de liaison 130 comprennent une ouverture ou détourage 170 comme illustré en particulier sur la figure 5. Cette ouverture 170 est destinée à l'insertion, au moins partielle, de la serrure 30 à travers le renfort 100.

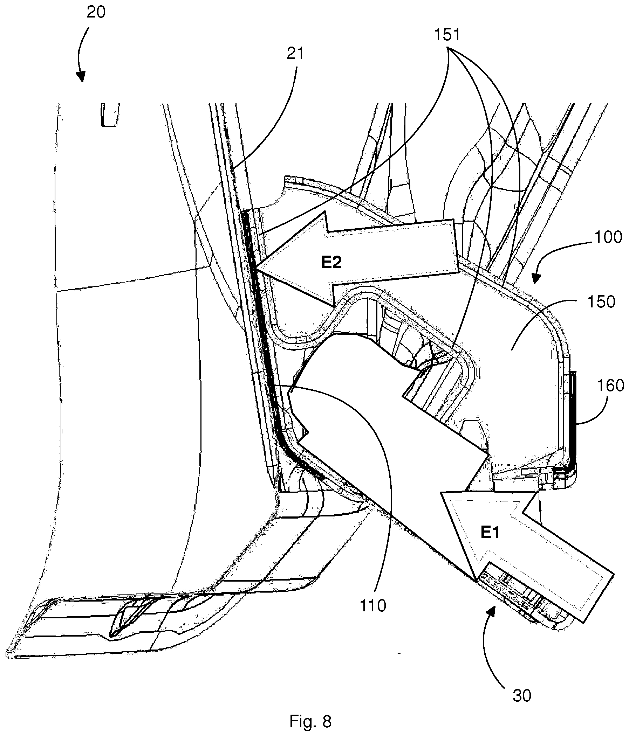

Comme illustrées en particulier sur les figures 3, 6 et 10, deux parois de rigidification 140, 150 s'étendent perpendiculairement, ou sensiblement perpendiculairement, à la paroi de fixation 110 et/ou à la paroi de réception 120. De préférence, dans le but d'augmenter leur rigidité, les deux parois de rigidification 140, 150 sont dotées de bords tombant 141, 151 comme illustrés par exemple sur les figures 6 et 8.

Le renfort 100 comprend également une paroi de soutien 160 destinée à lier les parois de rigidification 140, 150 entre elles. Des premières pattes 142, 152 d'assemblage s'étendent perpendiculairement ou sensiblement perpendiculairement depuis les parois de rigidification 140, 150 de sorte à venir à recouvrement de la paroi de soutien 160, en particulier à recouvrement d'une première face d'appui 162. Alternativement ou encore en complément, des premières pattes d'assemblage s'étendent perpendiculairement ou sensiblement perpendiculairement depuis la paroi de soutien 160 et viennent à recouvrement des parois de rigidification 140, 150.

Comme illustré sur la figure 6, des deuxièmes pattes 143, 153 d'assemblage peuvent venir à recouvrement d'une deuxième face d'appui 113 de la paroi de fixation 110, en particulier une deuxième face d'appui 113 orientée vers l'intérieur de la boîte formée par le renfort 100. Ces deuxièmes pattes 143, 153 s'étendent perpendiculairement ou sensiblement perpendiculairement depuis les parois de rigidification 140, 150. Alternativement ou en complément, des deuxièmes pattes d'assemblage s'étendent perpendiculairement ou sensiblement perpendiculairement depuis la paroi de fixation 110 et viennent à recouvrement des parois de rigidification 140, 150.

De préférence, les premières pattes 142, 152 sont collées et/ou soudées sur la première face d'appui 162 de la paroi de soutien 160. De préférence, les deuxièmes pattes 143, 153 sont collées et/ou soudées sur la deuxième face d'appui 113 de la paroi de fixation 110. Par exemple, chaque première patte et/ou deuxième patte est fixée avec un ou deux points de soudure sur la paroi afférente.

Comme illustré sur les figues 5, 9 et 10, chaque première patte 142, 152 de chaque paroi de rigidification 140, 150 comprend avantageusement un ergot 144, 154. Chaque ergot 144, 154 s'étend parallèlement ou sensiblement parallèlement à la paroi de réception 120 de sorte à assurer le maintien de la serrure 30. En effet, les ergots 144, 154 bloquent le déplacement d'une partie de fixation 31 de la serrure 30 selon la direction verticale Z (porte de coffre fermée) pour permettre de positionner la serrure 30 selon la direction longitudinale X avant de fixer, par exemple par vissage, la serrure Ainsi, au cours de l'étape de fixation de la serrure 30 sur le renfort 100, réalisée lorsque la porte de coffre est ouverte, les ergots 144, 154 maintiennent la serrure en position ce qui évite à un opérateur de le faire et lui facilite cet assemblage.

De préférence, un procédé d'obtention de l'agencement 10 comprend les étapes suivantes :
- étape de fourniture du renfort 100,
- étape de fourniture de la porte de coffre 20 du véhicule automobile 1, la porte de coffre 20 comprenant la doublure 22 dotée de la première face 21 et de la deuxième face 23, la première face 21 étant opposée à la deuxième face 23, et un panneau 26 comprenant la face intérieure 25 et la face extérieure 27, la face intérieure 25 étant opposée à la face extérieure 27, la deuxième face 23 de la doublure 22 étant fixée ou assemblée en vis-à-vis de la face intérieure 25 du panneau 26, la première face 21 de la doublure 22 étant plane ou sensiblement plane au niveau de la fixation du renfort 100 et/ou dotée d'au moins une nervure 21',

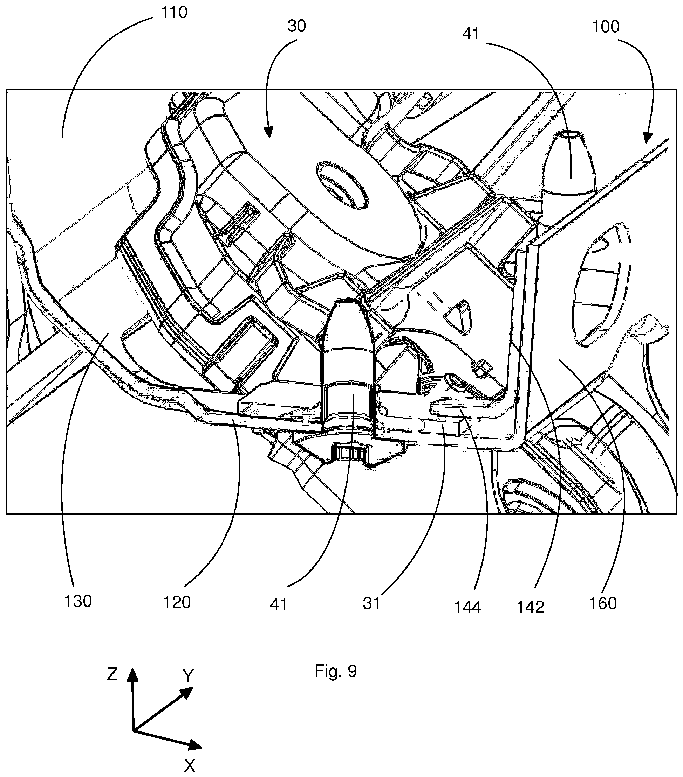

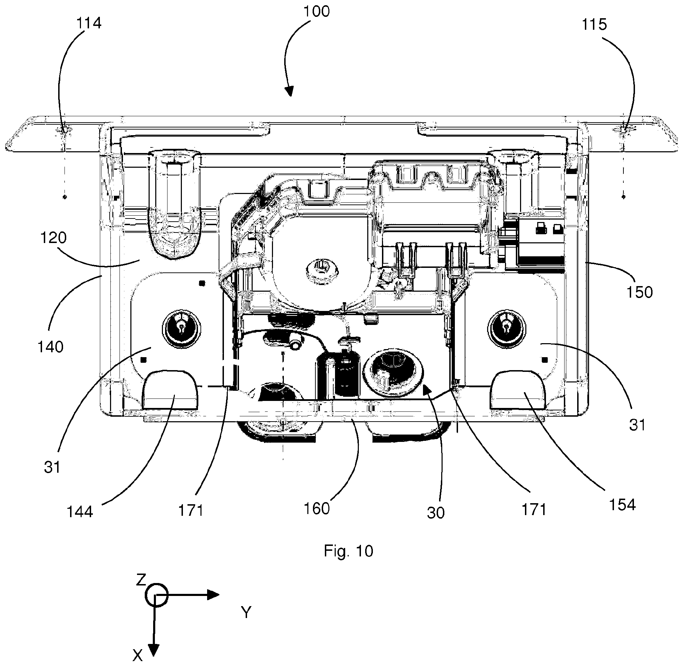

- étape de fixation du renfort 100 sur la première face 21, notamment par vissage ou rivetage,
- étape de fourniture de la serrure 30,
- étape d'insertion de la serrure 30 au sein du renfort 100, notamment en passant la serrure 30 au moins partiellement au sein de l'ouverture 170 ménagée au niveau de la paroi de réception 120 et/ou au niveau de la paroi de liaison 130 du renfort 100, notamment jusqu'à ce que les parties de fixation 31 de la serrure glissent derrière les ergots 144, 154 des premières pattes 142, 152, comme illustré sur la figure 9, et viennent en butée selon la direction longitudinale X (direction verticale Z en position de montage porte de coffre ouverte) sur des encoches 171 comme illustré sur la figure 10.
- étape de fixation de la serrure 30 sur le renfort 100, notamment sur une paroi de réception 120 du renfort 100, de préférence par vissage de vis 41 dans la serrure 30 maintenue par les ergots 144, 154 comme illustré sur la figure 10.

Cet agencement 10 offre une excellente tenue en endurance. En effet, comme illustré sur la figure 8, les efforts E1 (représentés par une flèche) générés sur la serrure 30, en particulier à la fermeture ou claquement de la porte de coffre 20, se répercutent en efforts E2 (représentés par une flèche). Ces efforts E2, de type compression, s'exercent depuis la paroi de fixation 110 du renfort 100 vers la première face 21 de la doublure 22 de la porte de coffre 20. De plus, la fixation du renfort 100, c'est-à-dire de la paroi de fixation 110 sur la première face 21 est par exemple assurée par des moyens de fixation de type vis et/ou rivet(s) traversant des trous 114, 115 illustrés sur la figure 10. Ces moyens de fixations, éventuellement complétés par un ou des points de soudure et/ou cordons de soudure ne sont quasiment pas sollicités en compression.

De plus, les rivets peuvent permettre la mise en position géométrique du renfort de serrure sur la doublure de hayon.

En cas de mode de réalisation comprenant un renfort en aluminium, sa fixation à la porte de coffre peut être obtenue par clinchage.

Bien que deux trous 114, 115 destinés aux passages des moyens de fixation soient illustrés, davantage de trous et de moyens de fixation peuvent convenir également.

Comme évoqué précédemment et illustré aux figures 5, 9 et 10, chaque première patte 142, 152 de chaque paroi de rigidification 140, 150 comprend avantageusement un ergot 144, 154. Chaque ergot assure le pré-maintien de la serrure 30, selon la direction verticale Z et/ou selon la direction longitudinale X, sur la paroi de réception 120. Ainsi, la mise en oeuvre de l'étape de fixation de la serrure 30 sur la paroi de réception 120 est facilitée, la serrure tenant elle-même sur la paroi de réception. La serrure 30 est alors maintenue au cours de sa fixation. Cette fixation se fait de préférence par vissage, selon la direction verticale Z par exemple, les vis 41 traversant des trous 124, 125 ménagés dans la paroi de réception 110. Les vis 41 se vissent dans la serrure ou module de serrure 30. De plus, les encoches 171 au sein de l'ouverture 170 permettent un pré-centrage, voire un centrage, de la serrure 30 selon la direction longitudinale X (porte de coffre fermée) et/ou un jeu réduit selon la direction transversale Y dans l'ouverture170 permettant le passage d'une partie de la serrure. Bien que deux vis 41 soient prévues dans ce mode de réalisation, une seule vis ou davantage de vis peuvent convenir.

Le renfort 100 est de préférence obtenu par pliage puis soudage et/ou collage, à partir d'une tôle métallique par exemple. La fabrication du renfort 100 n'ayant pas recours à l'emboutissage, il est inutile de prévoir de grands rayons. Il en résulte un renfort 100 en forme de « boîte fermée », difficile à « déplier » car doté d'une excellente tenue mécanique et d'une grande raideur. Le renfort 100 est compact et rigide, en particulier entre la paroi de fixation 110 et la paroi de réception 120 grâce aux parois de rigidification 140, 150. Compte tenue de cette raideur et du fait que le renfort soit fixé depuis l'intérieur de la porte de coffre 20, directement sur la première face 21, les efforts E1 reçus par le renfort 100 entraînent des efforts E2 sur la doublure 22. Les efforts E2 sont principalement des efforts de compression.

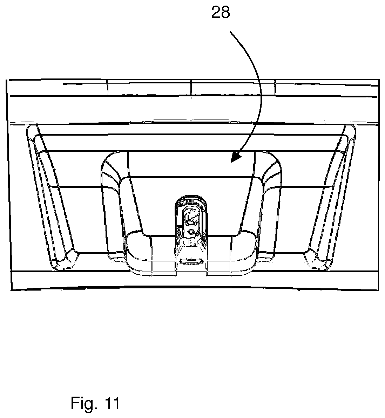

En outre, la compacité du renfort 100 permet un encombrement selon la direction transversale Y limité. Il en résulte la possibilité d'habiller la serrure 30 par une garniture 28 de porte de coffre (sans pièce rapportée) ainsi qu'une forme femelle correspondante pour une garniture de jupe (directement visible à l'ouverture de la porte de coffre 20). L'esthétique, et par conséquent la qualité perçue par les utilisateurs, de la garniture 28 s'en trouvent améliorés, comme illustré sur la figure 11.

Ainsi, cet agencement 10 atteint l'objectif d'être particulièrement endurant, les efforts dus aux claquements de la porte de coffre 20 étant transmis depuis la serrure 30 au renfort 100 puis, perpendiculairement, ou sensiblement perpendiculairement, à la première face 21 de la doublure 22. La première face 21, de préférence plane ou sensiblement plane, et pouvant être dotée de nervure 21' afin d'assurer une bonne tension de la tôle, est particulièrement rigide. Ainsi, le contact entre le renfort 100 et la doublure 22 se fait par un seul et même plan, engendrant beaucoup de rigidité, en particulier au niveau de la doublure 22 lors du claquement de la porte de coffre 20.

En effet, de préférence le renfort 100 dispose d'un seul plan d'appui, celui de la paroi de fixation 110 plane ou sensiblement plane, en contact avec la première face 21 plane ou sensiblement plane, localisée sur une zone réduite de la doublure 22. Ceci facilite l'obtention d'un positionnement du renfort 100, et par conséquent de la serrure 30, correcte en termes de géométrie et sans dispersion. La maîtrise des jeux et/ou affleurements de la partie inférieure de la porte de coffre 20 par rapport au bouclier arrière et/ou cotés de caisse et/ou feux arrière s'en trouve facilitée.

En outre, l'accès depuis l'extérieur 3 à la serrure 30 est limité à un orifice 29 de passage de câblage/connecteur destinés par exemple à une caméra de recul. Cet orifice 29 ne donne pas l'accès au doigt de dé condamnation de la serrure 30. Cet orifice 29 ne permet pas non plus la vision de la serrure, un capot étant de préférence prévu sur la serrure 30.

Cet agencement 10 est particulièrement adapté à une porte de coffre 20 et présente les avantages suivants :
- il est adapté pour tous types de porte de coffre en tôle (acier ou alliage d'aluminium ou aluminium), le renfort 100 étant une pièce « rapportée » sur la porte de coffre selon le modèle de serrure 30 retenu ;
- il est économique à fabriquer, le procédé de mise en forme du renfort requérant seulement du pliage, moins onéreux en termes d'outillage que l'emboutissage ;
- la matière du renfort est peu onéreuse, par exemple de l'acier ;
- il est facile à mettre en oeuvre, les opérations de montage étant simples ;
- il permet de s'affranchir d'installer une plaque d'inviolabilité sur le renfort de serrure ;
- il peut être utilisé sur tous types de véhicules automobiles, ainsi que des véhicules automobiles utilitaires.

Cet agencement peut également convenir pour un ouvrant de véhicule automobile autre qu'une porte de coffre ou hayon. Par exemple, il peut comprendre une porte latérale, notamment une porte latérale dotée d'un axe de rotation selon une direction longitudinale ou sensiblement longitudinale, parfois appelée « porte papillon ».

## Revendications

1. Agencement (10) comprenant un ouvrant de véhicule automobile (1) de type porte de coffre (20), un renfort (100) de serrure (30) fixé sur cet ouvrant et une serrure (30), l'ouvrant comprenant :
- une doublure (22) dotée d'une première face (21) et d'une deuxième face (23), la première face (21) étant opposée à la deuxième face (23),
- un panneau (26) comprenant une face intérieure (25) et une face extérieure (27), la face intérieure (25) étant opposée à la face extérieure (27),
la deuxième face (23) de la doublure (22) étant fixée à la face intérieure (25) du panneau (26),
le renfort (100) de serrure (30) étant obtenu par pliage d'une tôle métallique, le renfort (100) de serrure (30) étant fixé sur la première face (21) de la doublure (22), tel que le renfort (100) de serrure (30) présente une forme générale de boîte comprenant une paroi de fixation (110) du renfort (100) sur la première face (21) de la doublure (22) de l'ouvrant, notamment une paroi de fixation (110) plane ou sensiblement plane et en ce que le renfort (100) comprend une paroi de réception (120) de la serrure (30) sur le renfort (100) distincte de la paroi de fixation (110), la paroi de réception (120) étant perpendiculaire ou sensiblement perpendiculaire à la paroi de fixation (110).

2. Agencement (10) selon la revendication précédente, **caractérisé en ce que** la première face (21) de la doublure (22) de l'ouvrant est plane ou sensiblement plane au niveau de la fixation du renfort (100) et/ou dotée d'au moins une nervure (21').

3. Agencement (10) selon l'une des revendications précédentes, **caractérisé en ce que** la paroi de fixation (110) et la paroi de réception (120) se rejoignent par une paroi de liaison (130), notamment une paroi de liaison (130) dotée d'au moins une nervure (131).

4. Agencement (10) selon la revendication précédente, **caractérisé en ce que** la paroi de réception (120) et/ou la paroi de liaison (130) comprennent une ouverture (170) au travers de laquelle la serrure (30) s'étend une fois assemblée au renfort (100).

5. Agencement (10) selon l'une quelconque des revendications précédentes, **caractérisé en ce que** le renfort (100) comprend deux parois de rigidification (140, 150) s'étendant perpendiculairement ou sensiblement perpendiculairement à la paroi de fixation (110) et/ou à la paroi de réception (120), notamment chaque paroi de rigidification (140, 150) est dotée de bords tombant (141, 151).

6. Agencement (10) selon la revendication précédente, **caractérisé en ce que** le renfort (100) comprend une paroi de soutien (160) liant les parois de rigidification (140, 150) entre elles, par l'intermédiaire de premières pattes (142, 152) d'assemblage venant à recouvrement de la paroi de soutien (160) et/ou des parois de rigidification (140, 150), de sorte à être fixées par collage et/ou soudage.

7. Agencement (10) selon l'une quelconque des revendications précédentes, **caractérisé en ce que** le renfort (100) comprend des deuxièmes pattes (143, 153) d'assemblage venant à recouvrement d'une deuxième face d'appui (113) de la paroi de fixation (110), notamment d'une deuxième face d'appui (113) intérieure, de sorte à être fixées par collage et/ou soudage et/ou les deuxièmes pattes (143, 153) sont collées et/ou soudées sur la deuxième face d'appui (113) de la paroi de fixation (110).

8. Agencement (10) selon la revendication 6, **caractérisé en ce que** chaque première patte (142, 152) d'assemblage comprend un ergot (144, 154), notamment un ergot (144, 154) s'étendant parallèlement ou sensiblement parallèlement à la paroi de réception (120) de sorte à assurer le pré maintien de la serrure (30) lors de la fixation de la serrure (30) sur la paroi de réception (120).

9. Véhicule automobile (1), **caractérisé en ce qu'**il comprend au moins un agencement (10) selon l'une des revendications précédentes.

10. Procédé d'obtention d'un agencement (10) selon l'une des revendications 1 à 8, **caractérisé en ce qu'**il comprend les étapes suivantes :
- étape de fourniture d'un renfort (100) de serrure (30),
- étape de fourniture d'un ouvrant de véhicule automobile (1) de type porte de coffre (20), l'ouvrant comprenant une doublure (22) dotée d'une première face (21) et d'une deuxième face (23), la première face (21) étant opposée à la deuxième face (23), et un panneau (26) comprenant une face intérieure (25) et une face extérieure (27), la face intérieure (25) étant opposée à la face extérieure (27), la deuxième face (23) de la doublure (22) étant fixée à la face intérieure (25) du panneau (26), la première face (21) de la doublure (22) de l'ouvrant étant plane ou sensiblement plane au niveau de la fixation du renfort (100) et/ou dotée d'au moins une nervure (21'),
- étape de fixation du renfort (100) sur la première face (21) de la doublure (22) de l'ouvrant, notamment par vissage par la paroi de fixation (110),
- étape de fourniture d'une serrure (30),
- étape d'insertion de la serrure (30) au sein du renfort (100), notamment en passant la serrure (30) entre les parois de rigidification (140, 150), notamment en passant la serrure (30) au moins partiellement au sein d'une ouverture (170) ménagée au niveau d'une paroi de réception (120) du renfort (100), et/ou au niveau d'une paroi de liaison (130) du renfort (100), notamment jusqu'à venir en butée entre des ergots (144, 154) des premières pattes (142, 152) d'assemblage et une paroi de réception (120),
- étape de fixation, notamment par vissage, de la serrure (30) sur une paroi de réception (120) du renfort (100) perpendiculaire ou sensiblement perpendiculaire à la paroi de fixation (110).

## Patentansprüche

1. Anordnung (10), welche ein Öffnungselement eines Kraftfahrzeugs (1) vom Typ einer Hecktür (20), eine Verstärkung (100) eines Schlosses (30), die an diesem Öffnungselement befestigt ist, und ein Schloss (30) umfasst, wobei das Öffnungselement umfasst:
- eine Verkleidung (22) mit einer ersten Seite (21) und einer zweiten Seite (23), wobei die erste Seite (21) der zweiten Seite (23) gegenüberliegt,
- eine Platte (26), die eine Innenseite (25) und eine Außenseite (27) umfasst, wobei die Innenseite (25) der Außenseite (27) gegenüberliegt,
wobei die zweite Seite (23) der Verkleidung (22) an der Innenseite (25) der Platte (26) befestigt ist,
wobei die Verstärkung (100) des Schlosses (30) durch Biegen eines Metallblechs erhalten wird, wobei die Verstärkung (100) des Schlosses (30) auf der ersten Seite (21) der Verkleidung (22) befestigt ist,
von solcher Art, dass die Verstärkung (100) des Schlosses (30) eine allgemeine Form eines Gehäuses aufweist, das eine Wand zur Befestigung (110) der Verstärkung (100) auf der ersten Seite (21) der Verkleidung (22) des Öffnungselements umfasst, insbesondere eine ebene oder im Wesentlichen ebene Befestigungswand (110), und dadurch, dass die Verstärkung (100) eine Wand zur Aufnahme (120) des Schlosses (30) auf der Verstärkung (100) umfasst, die von der Befestigungswand (110) verschieden ist, wobei die Aufnahmewand (120) senkrecht oder im Wesentlichen senkrecht zur Befestigungswand (110) ist.

2. Anordnung (10) nach dem vorhergehenden Anspruch, **dadurch gekennzeichnet, dass** die erste Seite (21) der Verkleidung (22) des Öffnungselements im Bereich der Befestigung der Verstärkung (100) eben oder im Wesentlichen eben ist und/oder mit mindestens einer Rippe (21') versehen ist.

3. Anordnung (10) nach einem der vorhergehenden Ansprüche, **dadurch gekennzeichnet, dass** die Befestigungswand (110) und die Aufnahmewand (120) über eine Verbindungswand (130) miteinander verbunden sind, insbesondere eine Verbindungswand (130), die mit mindestens einer Rippe (131) versehen ist.

4. Anordnung (10) nach dem vorhergehenden Anspruch, **dadurch gekennzeichnet, dass** die Aufnahmewand (120) und/oder die Verbindungswand (130) eine Öffnung (170) umfassen, durch welche sich das Schloss (30) erstreckt, wenn es mit der Verstärkung (100) zusammengebaut ist.

5. Anordnung (10) nach einem der vorhergehenden Ansprüche, **dadurch gekennzeichnet, dass** die Verstärkung (100) zwei Versteifungswände (140, 150) umfasst, die sich senkrecht oder im Wesentlichen senkrecht zur Befestigungswand (110) und/oder zur Aufnahmewand (120) erstrecken, wobei insbesondere jede Versteifungswand (140, 150) mit abfallenden Rändern (141, 151) versehen ist.

6. Anordnung (10) nach dem vorhergehenden Anspruch, **dadurch gekennzeichnet, dass** die Verstärkung (100) eine Stützwand (160) umfasst, welche die Versteifungswände (140, 150) über erste Verbindungslaschen (142, 152) miteinander verbindet, welche die Stützwand (160) und/oder Versteifungswände (140, 150) überlappen, wobei sie durch Kleben und/oder Schweißen befestigt sind.

7. Anordnung (10) nach einem der vorhergehenden Ansprüche, **dadurch gekennzeichnet, dass** die Verstärkung (100) zweite Verbindungslaschen (143, 153) umfasst, die eine zweite Anlagefläche (113) der Befestigungswand (110), insbesondere eine innere zweite Anlagefläche (113), überlappen, wobei sie durch Kleben und/oder Schweißen befestigt sind, und/oder wobei die zweiten Laschen (143, 153) auf die zweite Anlagefläche (113) der Befestigungswand (110) geklebt oder geschweißt sind.

8. Anordnung (10) nach Anspruch 6, **dadurch gekennzeichnet, dass** jede erste Verbindungslasche (142, 152) einen Ansatz (144, 154) umfasst, insbesondere einen Ansatz (144, 154), der sich parallel oder im Wesentlichen parallel zur Aufnahmewand (120) erstreckt, um das Halten des Schlosses (30) während der Befestigung des Schlosses (30) an der Aufnahmewand (120) sicherzustellen.

9. Kraftfahrzeug (1), **dadurch gekennzeichnet, dass** es mindestens eine Anordnung (10) nach einem der vorhergehenden Ansprüche umfasst.

10. Verfahren zur Herstellung nach einem der Ansprüche 1 bis 8, **dadurch gekennzeichnet, dass** es die folgenden Schritte umfasst:
- einen Schritt der Bereitstellung einer Verstärkung (100) eines Schlosses (30),
- einen Schritt der Bereitstellung eines Öffnungselements eines Kraftfahrzeugs (1) vom Typ einer Hecktür (20), wobei das Öffnungselement eine Verkleidung (22) mit einer ersten Seite (21) und einer zweiten Seite (23), wobei die erste Seite (21) der zweiten Seite (23) gegenüberliegt, und eine Platte (26), die eine Innenseite (25) und eine Außenseite (27) umfasst, wobei die Innenseite (25) der Außenseite (27) gegenüberliegt, umfasst, wobei die zweite Seite (23) der Verkleidung (22) an der Innenseite (25) der Platte (26) befestigt ist, wobei die erste Seite (21) der Verkleidung (22) des Öffnungselements im Bereich der Befestigung der Verstärkung (100) eben oder im Wesentlichen eben ist und/oder mit mindestens einer Rippe (21') versehen ist,
- einen Schritt der Befestigung der Verstärkung (100) auf der ersten Seite (21) der Verkleidung (22) des Öffnungselements, insbesondere durch Verschraubung über die Befestigungswand (110),
- einen Schritt der Bereitstellung eines Schlosses (30),
- einen Schritt des Einsetzens des Schlosses (30) ins Innere der Verstärkung (100), insbesondere durch Hindurchbewegen des Schlosses (30) zwischen den Versteifungswänden (140, 150), insbesondere durch Bewegen des Schlosses (30) wenigstens teilweise in eine Öffnung (170) hinein, die an einer Aufnahmewand (120) der Verstärkung (100) und/oder an einer Verbindungswand (130) der Verstärkung (100) ausgebildet ist, insbesondere bis es zwischen Ansätzen (144, 154) der ersten Verbindungslaschen (142, 152) und einer Aufnahmewand (120) zur Anlage kommt,
- einen Schritt der Befestigung, insbesondere durch Verschraubung, des Schlosses (30) an einer Aufnahmewand (120) der Verstärkung (100), die senkrecht oder im Wesentlichen senkrecht zur Befestigungswand (110) ist.

## Claims

1. Arrangement (10) comprising a motor vehicle (1) opening panel of boot lid (20) type, a lock (30) reinforcement (100) fixed onto this opening panel and a lock (30), the opening panel comprising:
- a lining (22) provided with a first face (21) and a second face (23), the first face (21) being opposite the second face (23),
- a panel (26) comprising an inner face (25) and an outer face (27), the inner face (25) being opposite the outer face (27),
the second face (23) of the lining (22) being fixed to the inner face (25) of the panel (26),
the lock (30) reinforcement (100) being obtained by folding of a metal sheet, the lock (30) reinforcement (100) being fixed onto the first face (21) of the lining (22),
such that the lock (30) reinforcement (100) has the overall shape of a box comprising a fixing wall (110) for fixing the reinforcement (100) onto the first face (21) of the lining (22) of the opening panel, notably a flat or substantially flat fixing wall (110) and in that the reinforcement (100) comprises a receiving wall (120) for receiving the lock (30) on the reinforcement (100) that is distinct from the fixing wall (110), the receiving wall (120) being at right angles or substantially at right angles to the fixing wall (110).

2. Arrangement (10) according to the preceding claim, **characterized in that** the first face (21) of the lining (22) of the opening panel is flat or substantially flat at the fixing of the reinforcement (100) and/or provided with at least one rib (21').

3. Arrangement (10) according to one of the preceding claims, **characterized in that** the fixing wall (110) and the receiving wall (120) are joined by a link wall (130), notably a link wall (130) provided with at least one rib (131) .

4. Arrangement (10) according to the preceding claim, **characterized in that** the receiving wall (120) and/or the link wall (130) comprise an aperture (170) through which the lock (30) extends once assembled with the reinforcement (100).

5. Arrangement (10) according to any one of the preceding claims, **characterized in that** the reinforcement (100) comprises two stiffening walls (140, 150) extending at right angles or substantially at right angles to the fixing wall (110) and/or to the receiving wall (120), notably each stiffening wall (140, 150) is provided with dropped edges (141, 151).

6. Arrangement (10) according to the preceding claim, **characterized in that** the reinforcement (100) comprises a support wall (160) linking the stiffening walls (140, 150) to one another, via first assembly lugs (142, 152) overlapping the support wall (160) and/or the stiffening walls (140, 150), so as to be fixed by bonding and/or welding.

7. Arrangement (10) according to any one of the preceding claims, **characterized in that** the reinforcement (100) comprises second assembly lugs (143, 153) overlapping a second bearing face (113) of the fixing wall (110), notably an inner second bearing face (113), so as to be fixed by bonding and/or welding and/or the second lugs (143, 153) are bonded and/or welded onto the second bearing face (113) of the fixing wall (110).

8. Arrangement (10) according to Claim 6, **characterized in that** each first assembly lug (142, 152) comprises a spur (144, 154), notably a spur (144, 154) extending parallel or substantially parallel to the receiving wall (120) so as to ensure the pre-holding of the lock (30) when the lock (30) is being fixed onto the receiving wall (120).

9. Motor vehicle (1), **characterized in that** it comprises at least one arrangement (10) according to one of the preceding claims.

10. Method for obtaining an arrangement (10) according to one of Claims 1 to 8, **characterized in that** it comprises the following steps:
- step of provision of a lock (30) reinforcement (100),
- step of provision of a motor vehicle (1) opening panel of boot lid (20) type, the opening panel comprising a lining (22) provided with a first face (21) and a second face (23), the first face (21) being opposite the second face (23), and a panel (26) comprising an inner face (25) and an outer face (27), the inner face (25) being opposite the outer face (27), the second face (23) of the lining (22) being fixed to the inner face (25) of the panel (26), the first face (21) of the lining (22) of the opening panel being flat or substantially flat at the fixing of the reinforcement (100) and/or provided with at least one rib (21'),
- step of fixing of the reinforcement (100) onto the first face (21) of the lining (22) of the opening panel, notably by screwing through the fixing wall (110),
- step of provision of a lock (30),
- step of insertion of the lock (30) into the reinforcement (100), notably by passing the lock (30) between the stiffening walls (140, 150), notably by passing the lock (30) at least partially into an aperture (170) formed in a receiving wall (120) of the reinforcement (100), and/or in a link wall (130) of the reinforcement (100), notably as far as to come into abutment between spurs (144, 154) of the first assembly lugs (142, 152) and a receiving wall (120),
- step of fixing, notably by screwing, of the lock (30) onto a receiving wall (120) of the reinforcement (100) at right angles or substantially at right angles to the fixing wall (110).
